# EUROPEAN PATENT APPLICATION

(11) **EP 3 886 026 A1**
(43) Date of publication of application: **29.09.2021**
(21) Application number: 21156392.9
(22) Date of filing: 10.02.2021
(51) Int. Cl.: G06Q 20/40, G06Q 20/32, G06Q 20/20, G06Q 20/02, G06Q 20/42, G06Q 20/24

(54) **INFORMATION PROCESSING APPARATUS AND METHOD**

(30) Priority: 24.03.2020 JP 2020053047
(71) Applicant: Toshiba TEC Kabushiki Kaisha, Tokyo 141-8562 (JP)
(72) Inventor: Kamamoto, Shunichiro, Shinagawa-ku, Tokyo 141-8562 (JP)
(74) Representative: Bandpay & Greuter

(57) **Abstract**

According to one or more embodiments, an information processing apparatus comprises a processor. The processor receives first information for user authentication from a customer terminal and registers second information that specifies a customer credit card when a customer is authenticated by the user authentication using the first information. The processor further receives third information that specifies the customer credit card for credit card settlement from a settlement apparatus. The processor then transmits a response to the settlement apparatus indicating signatureless settlement is permitted for the credit card when the registered second information specifies the credit card.

## Description

### FIELD

Embodiments described herein relate generally to an information processing apparatus and an information processing method.

### BACKGROUND

A payment by a credit card can be settled without requiring a signature of a customer or a card holder. This is called signatureless settlement. In the signatureless settlement scheme, a credit card company, which is an issuer of a credit card, allows a store, which is affiliated with the credit card company (hereinafter referred to as an affiliated store), to omit obtaining the signature of a customer under a predetermined condition. The condition may be that a transaction is not too expensive. For example, the signature can be omitted when some upper limit amount of money recently spent on the account over some predetermined time period has not been exceeded. The upper limit amount is referred to as a floor limit. If the condition is not met, that is if the transaction is too expensive or the floor limit is otherwise exceeded, a signature will be required for the credit card settlement even at the affiliated store.

In general, the predetermined conditions for the signatureless settlement do not depend on other conditions that might exist. For instance, even if there is a long line of customers behind one customer who is about to pay for commodities by his or her credit card at a store, a supermarket, a department store, or the like, a signature will still be required if the floor limit has been reached. Such other conditions that might exist do not alter the signatureless settlement permissions. At some stores, the signature process may require, a store clerk or the like to hand over a paper receipt to the customer or present an electronic device, such as a card reader terminal or dedicated signature terminal, to the customer. The customer then needs to manually sign the paper receipt, the signature terminal, or the like. Such a manual signature process takes extra time and can be cumbersome especially when there is a long line of customers at a cashier or the like.

Hence, there is need for an information processing apparatus and an information processing program that are capable of achieving quick settlement processing even when a floor limit has been reached.

### DESCRIPTION OF THE DRAWINGS

FIG. 1 depicts a settlement system according to a first embodiment.
FIG. 2 depicts a server apparatus according to a first embodiment.
FIG. 3 depicts an example content of an authentication table according to a first embodiment.
FIG. 4 depicts an example use of a settlement system according to a first embodiment.
FIG. 5 is a flowchart of processing according to a first embodiment.
FIG. 6 depicts an example content of an authentication according to a second embodiment.
FIG. 7 is a flowchart of information processing according to a second embodiment.

### DETAILED DESCRIPTION

In general, according to one embodiment, an information processing apparatus comprises a processor. The processor is configured to receive first information for user authentication of a credit card customer from a customer termina. The processor is also configured to register second information that specifies a credit card of the credit card customer if the credit card customer is authenticated in the user authentication based on the first information. The processor is further configured to receive third information that specifies the credit card for credit card settlement from a settlement apparatus and then transmit a response to the settlement apparatus indicating signatureless settlement is permitted for the credit card when the registered second information specifies the credit card.

Preferably, the processor is further configured to: receive fourth information indicating a position of the customer terminal; register the fourth information in association with the registered second information; receive fifth information indicating a position of the settlement apparatus; and transmit the response to the settlement apparatus indicating signatureless settlement is permitted for the credit card when both the registered second information specifies the credit card and the registered fourth information corresponds with the received fifth information.

Preferably, the processor is further configured to determine whether the position indicated by the fourth information is within a predetermined range from the position indicated by the fifth information.

Preferably, the processor is configured to transmit the response to the settlement apparatus indicating signatureless settlement is permitted for the credit card even when an upper transaction limit for signatureless settlement is exceeded.

Preferably, the processor is further configured to: register sixth information indicating an approval date and time in association with the registered second information; and delete the registered second information if a predetermined time period has elapsed from the approval date and time indicated by the sixth information.

Preferably, the processor is further configured to obtain a current date and time to determine whether the predetermined time period has elapsed from the approval data and time.

Preferably, the processor is further configured to: receive seventh information for setting the predetermined time period; and register the seventh information in association with the registered second information.

Preferably, the processor is further configured to: receive eighth information setting a number of times that the signatureless settlement can be permitted within the predetermined time period; register the eighth information in association with the registered second information; and determine whether the number of times set based on the eight information has been exceeded.

Preferably, the processor is further configured to transmit the response to the settlement apparatus indicating signatureless settlement is permitted for the credit card only when both the predetermined time period has not elapsed and the number of times has not been exceeded.

Preferably, the processor is further configured to delete the registered second information if the number of times has been exceeded.

Preferably, credit card includes a non-contact integrated circuit (IC) chip.

Preferably, the information processing apparatus further comprises a communication interface configured to communicatively connect to the customer terminal and the settlement apparatus.

There is also provided a non-transitory computer-readable medium storing a program for causing a computer to perform a process comprising: receiving first information for user authentication of a credit card customer from a customer terminal; registering second information that specifies a credit card of the credit card customer if the credit card customer is authenticated in the user authentication based on the first information; receiving third information that specifies the credit card for credit card settlement from a settlement apparatus; and transmitting a response to the settlement apparatus indicating signatureless settlement is permitted for the credit card when the registered second information specifies the credit card.

Preferably, the process further comprises: receiving fourth information indicating a position of the customer terminal; registering the fourth information in association with the registered second information; receiving fifth information indicating a position of the settlement apparatus; and transmitting the response to the settlement apparatus indicating signatureless settlement is permitted for the credit card when both the registered second information specifies the credit card and the registered fourth information corresponds with the received fifth information.

Preferably, the process further comprises: registering sixth information indicating an approval date and time in association with the registered second information; and deleting the registered second information if a predetermined time period has elapsed from the approval date and time indicated by the sixth information.

Hereinafter, embodiments of an information processing apparatus as well as an information processing program will be described with reference to the attached drawings.

### [First embodiment]

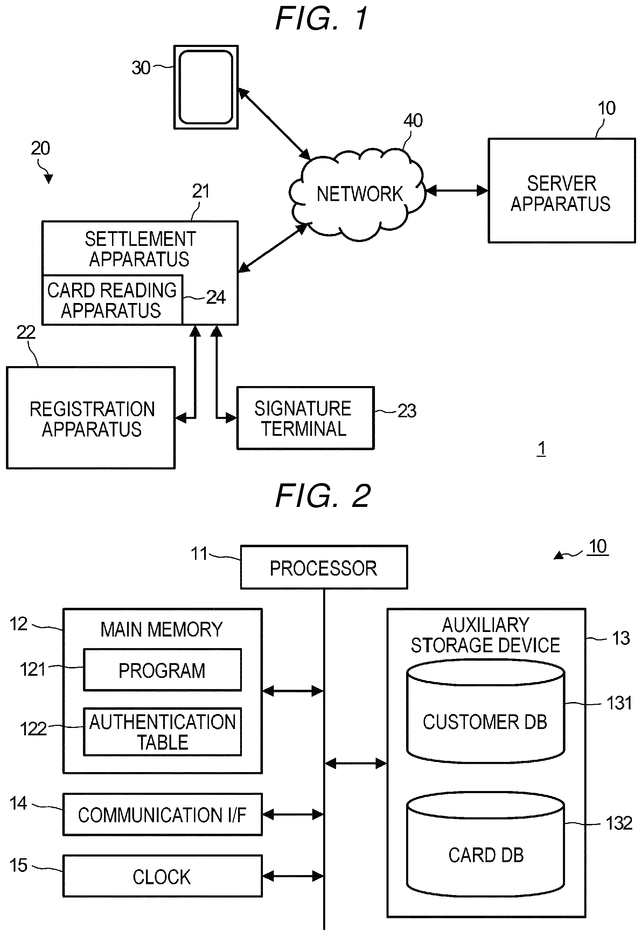

FIG. 1 is a block diagram illustrating a configuration of a settlement system 1 including a server apparatus 10 according to a first embodiment. The settlement system 1 includes the server apparatus 10, a store apparatus 20, and a customer portable terminal 30, which are connected to each other via a network 40.

The server apparatus 10 is provided at, for example, a credit card center that is operated by a credit card company that issues credit cards, debit cards, electronic wallets, electronic payment methods, or the like (herein these various payment methods are collectively referred to as "credit card payments," "credit card settlement," or "transaction settlement via a credit card" and references to a "credit card" should be understood to encompass each). The server apparatus 10 executes various payment processes including credit card settlement processing based on credit card transaction information from the store apparatus 20. The server apparatus 10 also performs user authentication with the customer portable terminal 30. The server apparatus 10 executes floor limit temporary release processing for temporarily releasing, increasing, or deactivating a floor limit for a user or a customer that has been authenticated by the credit card company.

The store apparatus 20 includes a settlement apparatus 21 and a registration apparatus 22. In one instance, the store apparatus 20 may also include a signature terminal 23. The settlement apparatus 21 includes a card reading apparatus 24.

The settlement apparatus 21 is configured to perform various settlement processes at a store or the like either in a state of being not interlocked with the registration apparatus 22 or in a state of being interlocked with the registration apparatus 22 which is connected thereto. When performing the settlement processes in the former state, the settlement apparatus 21 executes the settlement processing based on settlement information sent from the registration apparatus 22 thereto. The settlement apparatus 21 also has a function of transmitting credit card transaction information including settlement amount information to the server apparatus 10 via the network 40.

The registration apparatus 22 is, for example, an apparatus capable of performing various registration processes. Examples of the registration apparatus 22 include, but not limited to, a point-of-sale (POS) information management terminal, an electronic cash register (ECR) or the like. In the present embodiment, the registration apparatus 22 has a function of performing registration processing of commodities, each of which is a target of a commercial transaction. The registration apparatus 22 also has a function of performing payment settlement processing of a price of each registered commodity. The registration apparatus 22 also has a function of sending the settlement information to the settlement apparatus 21 in order to cause the settlement apparatus 21 to perform the settlement processing.

The settlement apparatus 21 can use a standard settlement methods, such as credit card settlement, debit card settlement, prepaid card settlement, electronic money settlement, rewards point settlement, store voucher settlement, or the like. With these various settlement methods, a physical card (a card medium) may be used when presented by a customer. Types of such a card medium includes but not limited to a magnetic card (for example, a magnetic stripe card), a contact type IC card, and a non-contact type IC card. The card medium records data therein by a recording element configured depending on type such as a magnetic stripe, a contact type IC chip, or a non-contact type IC chip. In some instances, an electronic device equipped with a non-contact type IC chip (for example, a mobile phone, a smart phone, and a tablet PC) may be used by a customer for settlement. In such cases, the electronic device serves as the card medium.

In the present embodiment, the card reading apparatus 24 of the settlement apparatus 21 is configured to read a magnetic card. However, the store apparatus 20 may also, or instead, include a reading terminal for reading information stored in a non-contact type IC chip or a pin pad terminal for reading information from a contact type IC card.

The signature terminal 23 of the store apparatus 20 has a touch panel (not separately depicted). The touch panel is formed of a display apparatus and a touch detection element arranged in a stacked state on a display surface of the display apparatus according to one embodiment. The touch detection element detects a touch operation of an input device such as a stylus pen on the display surface of the display apparatus by an operator and outputs a touch position as coordinate position information. The display apparatus may change a color of one or a plurality of display pixels corresponding to the coordinate positions as the stylus pen moves. A signature in accordance with movement of an operator who writes his or her signature on the display surface of the display apparatus with the input device such as the stylus pen can be displayed on the display surface. In response to a predetermined confirmation operation after completion of the signature writing operation, the signature terminal 23 fetches the signature displayed on the display surface as image data and outputs the fetched image data to the settlement apparatus 21. Therefore, the settlement apparatus 21 can use the image data outputted from the signature terminal 23 as card holder verification information at the time of inquiring of the credit card company about credit card transaction approval.

As a position detection method of the touch detection member in the signature terminal 23, various methods such as a film resistance method, an electrostatic capacitance method, an electromagnetic induction method, an optical method, or an elastic wave method can be used. A liquid crystal display may be used as the display apparatus. The display apparatus may include a backlight.

The customer portable terminal 30 is an electronic device such as a smartphone and a tablet PC. The customer portable terminal 30 can have a function of causing the server apparatus 10 to temporarily release or deactivate the floor limit. This function can be realized by, for example, allowing the customer portable terminal 30 to execute application software provided by the credit card company (hereinafter referred to as a smartphone application).

The network 40 is, for example, the Internet, a telephone line network, a mobile phone line network, a dedicated line, another network, or a combination thereof.

FIG. 2 is a block configuration diagram of the server apparatus 10 according to the first embodiment. The server apparatus 10 includes a processor 11, a main memory 12, an auxiliary storage device 13, a communication interface (I/F) 14, and a clock 15.

The processor 11 is a CPU that performs processing and control necessary for the operation of the server apparatus 10. The processor 11 realizes various functions of the server apparatus 10 according to a program (or programs) 121, such as a BIOS, an operating system, and application software. The processor 11 can control the communication I/F 14 to transmit and receive data to and from the settlement apparatus 21 and the customer portable terminal 30 via the network 40.

The main memory 12 includes a ROM and a RAM, for example. The ROM stores the program 121. The ROM may also store other data necessary for the processor 11 to execute the program 121 or various processing for controlling each unit of the server apparatus 10. The RAM stores data necessary for the processor 11 to execute processing. For example, the RAM stores an authentication table 122 in which a condition for temporarily releasing the floor limit is stored. The processor 11 also uses the RAM as a work area in which information can be appropriately rewritten.

The auxiliary storage device 13 is, for example, an EEPROM@, an HDD, and/or an SSD. The auxiliary storage device 13 stores data used by the processor 11 for performing various processing or data generated by the processing of the processor 11. The auxiliary storage device 13 may store the program 121. The auxiliary storage device 13 may store the authentication table 122 in some cases. The auxiliary storage device 13 includes a customer database (DB) 131. The customer DB 131 stores information about a customer with a credit card and information about a contracted store or an affiliated store. The auxiliary storage device 13 also includes a card database (DB) 132 that stores information for the settlement by the credit card. In some examples, one or both of the customer DB 131 and the card DB 132 may not be provided within the server apparatus 10 itself. For example, one or both databases can be provided in a database server that can be accessed via the network 40.

The program 121 stored in the main memory 12 or the auxiliary storage device 13 includes a control program that describes control processing. As an example, the server apparatus 10 may be provided to a credit card company, which utilizes the settlement system 1, in a state in which the control program has already been stored in the main memory 12 or the auxiliary storage device 13. In another example, the settlement apparatus 21 may be provided to the credit card company in a state in which the control program has not yet been stored in the main memory 12 or the auxiliary storage device 13. In such a case, the control program may be separately provided to the credit card company and then subsequently written to the main memory 12 or the auxiliary storage device 13 under the control of the credit card company or a serviceperson. The control program can be transferred by being recorded on a removable, non-transitory computer-readable recording medium or by being downloaded via the network 40. In this context, the recording medium includes, but is not limited to, a magnetic disk, a magneto-optical disk, an optical disk, and a non-volatile semiconductor memory device.

The communication I/F 14 includes a communication apparatus and a communication connector and communicates with a device connected to the communication connector. The communication connector is, for example, a terminal for connecting an Ethernet® cable or a telephone line. The communication I/F 14 may also wirelessly communicate with a wireless access point connected to the network 40 without using the communication connector. For example, a wireless LAN or a mobile phone network can be used for the wireless communication. The server apparatus 10 can be connected to the settlement apparatus 21 or the customer portable terminal 30 via the network 40 such as the Internet, the telephone line network, the mobile phone network, a dedicated line, another network, or a combination thereof.

The clock 15 tracks a current date and time.

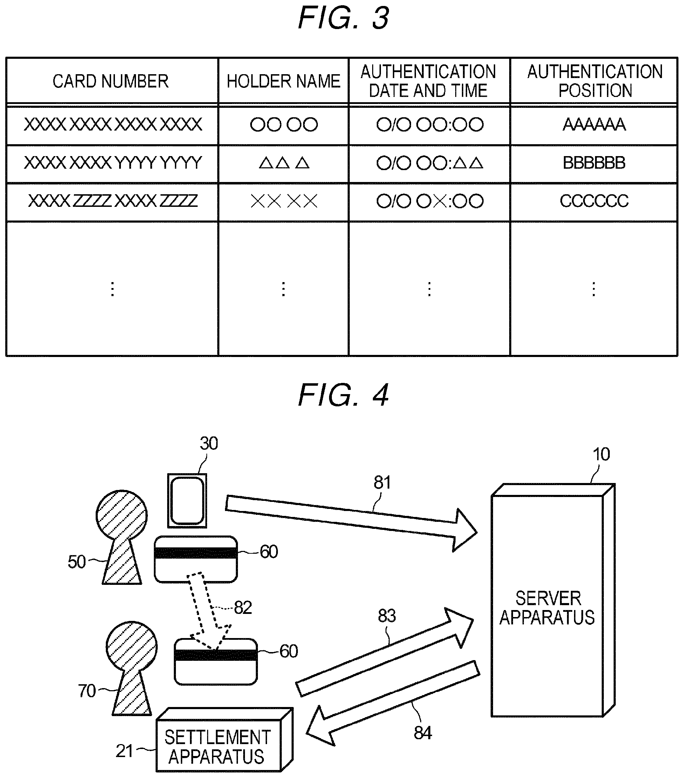

FIG. 3 is a diagram illustrating an example of a content of the authentication table 122 in which the condition for temporarily releasing the floor limit is stored according to the first embodiment. The authentication table 122 stores a card number, a holder name, an authentication date and time (herein may also be referred to as an approval date and time), and an authentication position in association with each other.

In the example of FIG. 3, the authentication table 122 stores the card number, the holder name, the authentication date and time, and the authentication position as one record. In the present embodiment, the card number is a number uniquely assigned to the credit card (for example, customer's credit card 60 in FIG. 4). The holder name is a name of a holder of the credit card. Further, in the present embodiment, the authentication or approval date and time is a date and time when the user authentication was performed to approve the customer 50 as a user upon receipt of the information for user authentication from the customer portable terminal 30. The authentication position may correspond to the particular customer portable terminal 30 from which the user authentication is performed and/or a particular store at which the customer portable terminal 30 is located. In some cases, the authentication position can just be a store name for specifying the store. In the case of a large-scale store facility within a certain geographical area such as a shopping mall or a department store, then the store name may be the name of the overall store facility or the name of an individual store therein. In general, the choice(s) utilized for the store name may be decided by the credit card company that operates the server apparatus 10 or may be set on a customer/user side. In an example, the processor 11 can determine the authentication position based on position measurement information obtained by a GPS sensor provided in the customer portable terminal 30. The position measurement information can be transmitted from the customer portable terminal 30 at the time of the user authentication. The processor 11 can search the customer DB 131 based on the position measurement information transmitted from the customer portable terminal 30 and retrieve the store name from store information stored in the customer DB 131. The processor 11 can also retrieve the store name if the customer portable terminal 30 is connected to the server apparatus 10 using a wireless access point known to be installed in the store. In this case, the processor 11 may use an IP address of the wireless access point instead of the position measurement information to identify the store name or the like. In some examples, the authentication position may be the position measurement information itself without conversion into a store name or the like.

FIG. 4 is a schematic diagram illustrating a usage state of the settlement system 1 according to the first embodiment. When performing credit card settlement at a store, a customer 50 requests the server apparatus 10 to temporarily release or deactivate the floor limit as indicated by an arrow 81 in FIG. 4. For example, the customer 50 operates the customer portable terminal 30 carried by the customer 50 during shopping or while waiting in line for the settlement. The customer portable terminal 30 is, for example, a smartphone. The customer 50 starts an application (for example, a smartphone application in the case of the smartphone) installed in the customer portable terminal 30 and performs a login operation using a password. In response to the login operation, the customer portable terminal 30 transmits user authentication information registered in the installed application to the server apparatus 10 via the network 40. The user authentication information is the information for the server apparatus 10 of the credit card company to perform user authentication to approve (pre-approve) the customer 50 as a user of the settlement system 1. The user authentication information uniquely identifies the customer 50 and includes information or data such as customer's name, login password and the like. The user authentication information may also include, for example, the position measurement information indicating the present position of the customer portable terminal 30.

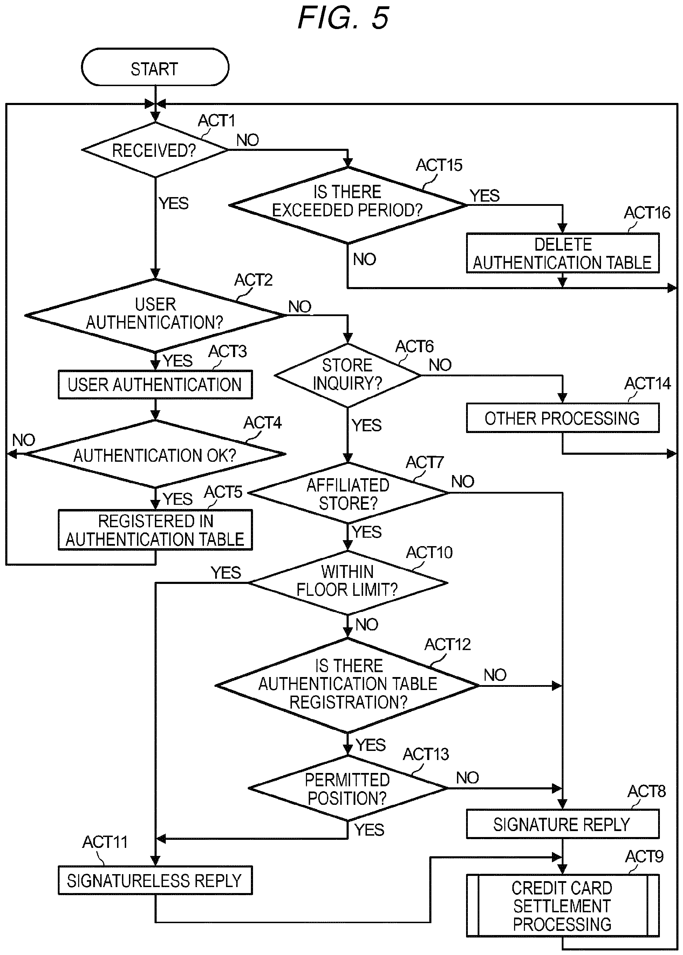

FIG. 5 is a flowchart of processing executed by the processor 11 of the server apparatus 10 according to the first embodiment. When the server apparatus 10 starts up, the processor 11 starts control processing illustrated in FIG. 5 according to the control program, which is one of the programs 121 stored in the main memory 12 or the auxiliary storage device 13. A content of the processing described herein is an example, and various processing that can obtain the same or substantially the same result can be appropriately used.

First, the processor 11 of the server apparatus 10 determines whether there is any reception from the settlement apparatus 21 or the customer portable terminal 30 via the network 40 by the communication I/F 14 (ACT 1).

When there is a reception (YES in ACT 1), the processor 11 determines whether the reception is of user authentication information from the customer portable terminal 30 (ACT 2).

If the reception is of the user authentication information from the customer portable terminal 30 (YES in ACT 2), the processor 11 executes user authentication processing (ACT 3). For example, the processor 11 performs the user authentication processing by referring to information related to a customer stored in the customer DB 131 based on the received user authentication information. The processor 11 then determines whether or not an authentication result is "OK," (that is, attempted authentication is "Good") that is, whether the customer 50 has been approved as a user of the settlement system 1 (ACT 4).

In the case of non-authentication (that is, attempted authentication is "No Good" or "NG") (NO in ACT 4), the processor 11 sends back a result of the authentication "NG" (non-authentication) to the customer portable terminal 30 via the network 40 and returns to the processing of ACT 1).

In the case of the authentication "OK" (YES in ACT 4), the processor 11 registers a record corresponding to the approved customer 50 in the authentication table 122 (ACT 5). For example, the processor 11 refers to the customer DB 131 and acquires a card number and a holder name of a credit card associated with the approved customer 50. The processor 11 registers the record including the acquired card number and the holder name in the authentication table 122. The processor 11 also acquires a current date and time from the clock 15 and registers the acquired current date and time as authentication or approval date and time in the record.

The processor 11 further acquires a store position corresponding to a position where the customer portable terminal 30 locates from the customer DB 131 based on the position measurement information included in the user authentication information. The processor 11 registers the acquired store position in the record as an authentication position. When the user authentication is performed for a customer 50 in a case where there is a previously-registered record corresponding to the same customer 50 in the authentication table 122, the processor 11 overwrites the authentication date and time and the authentication position in that registered record. Subsequently, the processor 11 returns to the processing of ACT 1.

When performing settlement by a credit card 60, which is a magnetic card in the present embodiment, the customer 50 hands over the credit card 60 to a clerk 70 or the like at the store, as indicated by a dashed arrow 82 in FIG. 4. The clerk 70 reads data of the credit card 60 with the card reading apparatus 24. The settlement apparatus 21 then makes an inquiry for credit card settlement to the server apparatus 10 via the network 40 as indicated by an arrow 83. This inquiry includes the information for the credit card settlement such as the data of the credit card 60 as read by the card reading apparatus 24 and information that specifies the inquiring store. The information that specifies the store may be an identification number uniquely assigned to the store or may be the store position (e.g., GPS coordinates) or the store name.

Returning to the process of ACT 2, if the reception in the process of ACT 1 is not of the user authentication information from the customer portable terminal 30 (NO in ACT 2), the processor 11 of the server apparatus 10 further determines whether the reception is of an inquiry for credit card settlement from the store (or the settlement apparatus 21 of the store in the present embodiment) (ACT 6).

If the reception is of the inquiry for credit card settlement from the store (YES in ACT 6), the processor 11 determines whether the store is an affiliated store that has been designated as a store that can perform signatureless settlement by the credit card company (ACT 7). For example, the processor 11 determines whether the store is registered as an affiliated store in the customer DB 131 based on the information that specifies the store included in the inquiry.

If the store is not an affiliated store (NO in ACT 7), as indicated by an arrow 84 in FIG. 4, the processor 11 returns a signature reply to the settlement apparatus 21 of the inquiry source store via the network 40 (ACT 8). This signature reply indicates in this instance that a signature of the customer will be required for the credit card settlement. The processor 11 then performs credit card settlement processing with the settlement apparatus 21 via the network 40 and registers a transaction content in the card DB 132 (ACT 9). The credit card settlement processing in this instance requires card holder verification information provided by using the signature terminal 23. Once the credit card settlement processing is complete, the processor 11 returns to the processing of ACT 1.

If the store is an affiliated store (YES in ACT 7), the processor 11 next determines whether the credit card 60 transaction is within the floor limit (ACT 10). The processor 11 can perform this determination by referring to the card DB 132. If the credit card 60 transaction is within the floor limit (YES in ACT 10), as illustrated by the arrow 84 in FIG. 4, the processor 11 returns a signatureless reply to the settlement apparatus 21 at the inquiry source store via the network 40 (ACT 11). The signatureless reply indicates that a signature of the customer will not be required for the credit card settlement. The processor 11 then proceeds to the processing of ACT 9 and executes the credit card settlement processing. In this credit card settlement processing, the store apparatus 20 does not require the use of the signature terminal 23 for acquiring the card holder verification information.

In a case where the credit card 60 transaction reaches the floor limit (NO in ACT 10), the processor 11 next determines whether there is a registered record corresponding to the credit card 60 in the authentication table 122 (ACT 12). If there is no registered record corresponding to the credit card 60 therein (NO in ACT 12), the processor 11 proceeds to the processing of ACT 8 and returns a signature reply (which indicates a signature will be required for transaction settlement) to the settlement apparatus 21 at the inquiry source store.

If the registered record corresponding to the credit card 60 is found in the authentication table 122 (YES in ACT 12), the processor 11 then determines whether a present position of the customer 50 corresponds to a permitted position (ACT 13). In the present embodiment, the permitted position is a position for which the floor limit may be temporarily released, increased, or deactivated. The processor 11 executes this determination by comparing the authentication position registered in the record of the authentication table 122 with the position of the inquiry source store that has been registered in the customer DB 131. If the authentication position corresponds with the position of the inquiry source store, the processor 11 determines that the position of the customer 50 is a permitted position. In one instance, the processor 11 determines that the authentication position corresponds with the position of the inquiry source store if the authentication position matches with, or is within a predetermined error range, of the registered position of the inquiry source store. When the position of the customer 50 is the permitted position (YES in ACT 13), the processor 11 proceeds to the processing of ACT 11 and returns a signatureless reply (no signature is required for the transaction settlement by credit card 60) to the settlement apparatus 21. When the position of the customer 50 is not the permitted position (NO in ACT 13), the processor 11 proceeds to the processing of ACT 8 and returns a signature reply (signature is required for the transaction settlement by credit card 60) to the settlement apparatus 21.

In ACT 6, if the inquiry is not received from the store (NO in ACT 6), then the processor 11 executes other processing (ACT 14) in accordance with or based on any content, information, data or the like contained in the received communication. Subsequently, the processor 11 returns to the processing of ACT 1.

If there is no communication received from either the settlement apparatus 21 or the customer portable terminal 30 via the network 40 (NO in ACT 1), the processor 11 proceeds to determine whether there is a registered record in the authentication table 122 that has exceeded some predetermined period of time (ACT 15). For example, the predetermined time period can be set to any length of time deemed appropriate for determining whether to permit the next process of ACT 16. Such length of time may be, for example, 5 minutes, 10 minutes, or the like. These values are merely examples, and the length can be decided arbitrarily in advance by, for example, the credit card company on a variety of factors. In the process of ACT 15, the processor 11 compares the authentication date and time registered in each record of the authentication table 122 with the current date and time tracked by the clock 15 and determines whether there is a record for which the predetermined time period has elapsed. If there is no registered record that has exceeded the predetermined time period (NO in ACT 15), the processor 11 returns to the processing of ACT 1.

If there is a registered record that has exceeded the predetermined time period (YES in ACT 15), the processor 11 deletes that registered record from the authentication table 122 (ACT 16). Subsequently, the processor 11 returns to the processing of ACT 1.

According to the present first embodiment, the processor 11 of the server apparatus 10 functions as, for example, a first reception unit. In one instance, the processor 11 receives, as first information, information for the user authentication that uniquely specifies the customer 50 and/or credit card 60 including but not limited to a password from the customer portable terminal 30 operated by the customer 50 who intends to purchase commodities using the credit card 60 at a store (ACT 1 and ACT 2). The processor 11 also functions as, for example, a registration unit. In one instance, when the customer 50 can be approved by the user authentication based on the received first information, the processor 11 registers, in the authentication table 122, as second information, information that specifies the credit card 60 corresponding to the customer 50 such as a credit card number (ACT 3 to ACT 5). The processor 11 also functions as, for example, a second reception unit. In one instance, the processor 11 receives information that specifies the credit card 60 of the customer 50 from the settlement apparatus 21 for credit card settlement (ACT 1 and ACT 6). Such information may be included in an inquiry transmitted from the settlement apparatus 21 and may be referred to as third information herein. Further, the processor 11 functions as, for example, a settlement permission unit. For example, in a case where the credit card 60 specified by the received third information has exceeded the floor limit or the upper limit amount of money for a predetermined period of time (ACT 10) and there is a registered record of the second information of the credit card 60 in the authentication table 122 (ACT 12), the processor 11 permits the signatureless settlement by the credit card 60 at the settlement apparatus 21 (ACT 11).

Accordingly, in the first embodiment, when an inquiry for credit card settlement has been made by the settlement apparatus 21, the processor 11 regards the credit card 60 of the approved customer 50 as an authenticated credit card and returns a reply to the settlement apparatus 21 to permit the signatureless settlement even in a case where the floor limit has already been reached. The settlement apparatus 21 then proceeds with the settlement without user signature.

Therefore, the customer 50 does not need to sign for the credit card settlement and can save time even when the customer's credit card has reached the floor limit. The store side is not required to prepare a device such as a reading apparatus for reading an IC card and a pin pad terminal, either. The store only needs the card reading apparatus 24 for reading the magnetic card. Also, since the processing is executed by the server apparatus 10 at the credit card center, the processing can be realized without changing the interface between the settlement apparatus 21 and the server apparatus 10. Accordingly, the credit card company can easily construct the settlement system.

In the first embodiment, for example, the processor 11 may further receive fourth information indicating the position of the customer portable terminal 30 from the customer portable terminal 30 (ACT 2). When the processor 11 approves the customer 50 by user authentication (ACT 3 to ACT 5), the processor 11 may register the fourth information as the authentication position in association with the second information in the authentication table 122 (for example, ACT 5). The processor 11 may further receive fifth information indicating the position of the settlement apparatus 21 from the settlement apparatus 21 (ACT 1 and ACT 6). Subsequently, if both there is a registered record of the second information of the credit card 60 specified by the third information in the authentication table 122 (ACT 12) and the received fifth information and the registered fourth information correspond to each other (ACT 13), the processor 11 permits the signatureless settlement by the credit card 60 of the registered record (ACT11).

Accordingly, in the case of utilizing the position information, only when the conditions where a correspondence relationship between the position of the customer portable terminal 30 and the position of the settlement apparatus 21 is verified and the position of the customer portable terminal 30 does not substantially (for example, to a predetermined extent) deviate from the position of the settlement apparatus 21 are met, the signatureless settlement is permitted. On the other hand, if the position of the customer portable terminal 30 deviates from that of the settlement apparatus 21 beyond the predetermined extent, the signatureless settlement is not permitted. This prevents unauthorized use of the credit card 60 and realizes a settlement system having high security.

In the first embodiment, for example, when the processor 11 approves the customer 50 by executing the user authentication processing, the processor 11 may further associate the second information with an approval or authentication date and time, which is a sixth information indicating the date and time when the user approval or authentication has been conducted, and register the second information associated with the sixth information in the authentication table 122 (for example, ACT 5). The processor 11 may then function as a record deletion unit. For example, when a preset or predetermined period of time has elapsed from the approval date and time indicated by the sixth information registered in the authentication table 122, the processor 11 deletes the registered record having the elapsed date and time from the authentication table 122 (ACT 15 and ACT 16).

Accordingly, when a predetermined time elapses from the approval date and time, the record in which the information has been registered will be deleted from the authentication table 122. This temporarily releases or deactivates the floor limit.

### [Second Embodiment]

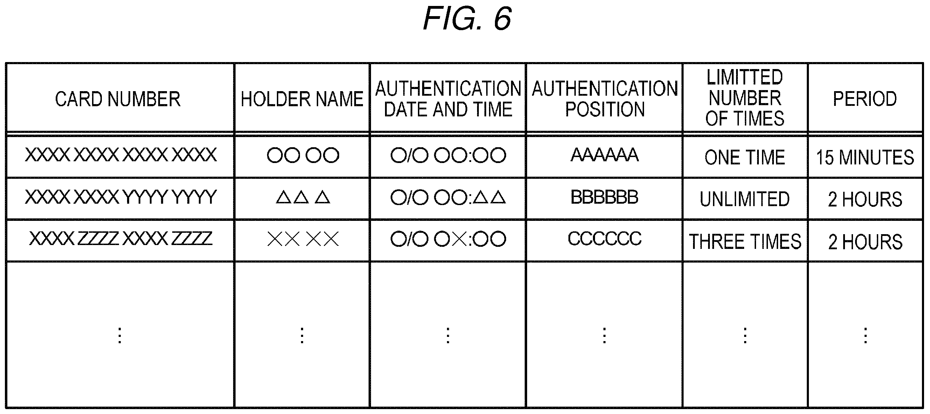

FIG. 6 is a diagram illustrating an example content of the authentication table 122 according to a second embodiment. The authentication table 122 of the second embodiment stores a limited number of times and a time period in association with each other in addition to the card number, the holder name, the authentication date and time (approval date and time), and the authentication position which are the same as those in the first embodiment. The limited number of times is, for example, the number of times that the customer 50 can perform the settlement by temporarily releasing or deactivating the floor limit set by the customer 50. The time period is, for example, a period during which the floor limit set by the customer 50 is temporarily released or deactivated.

In the first embodiment, the floor limit may be released only once during a predetermined time period from the authentication date and time. In the second embodiment, the customer 50 can freely set the limited number of times for temporarily releasing the floor limit and the time period during which the floor limit is temporarily released. The limited number of times and the time period may be set so as not to exceed predetermined thresholds.

In the second embodiment, when the floor limit has been temporarily released for the set limited number of times, the processor 11 deletes the record from the authentication table 122. When the set time period has elapsed from the authentication date and time, the processor 11 deletes the record from the authentication table 122.

The limited number of times and the time period can be set in advance at the customer portable terminal 30 such as a smartphone utilizing a smartphone application or the like operated by the customer 50 at any time prior to sending a request for temporary release of the floor limit therefrom to the server apparatus 10. At the time of requesting the temporary release of the floor limit, the customer portable terminal 30 transmits the user authentication information including the limited number of times and the time period to the processor 11 of the server 10 via the network 40. The processor 11 then registers the received limited number of times and time period in the corresponding record of the authentication table 122.

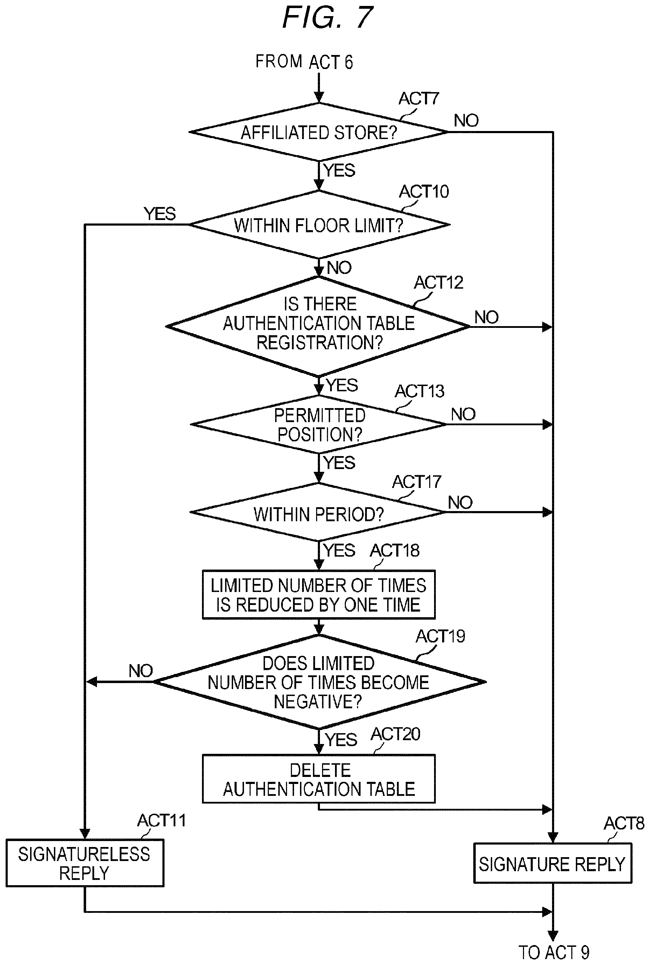

FIG. 7 is a flowchart of information processing executed by the processor 11 of the server apparatus 10 according to the second embodiment. In addition to the determination processes of ACT 12 and ACT 13, which are the same as or substantially the same as those of ACT12 and ACT13 in the flowchart of FIG.5 in the first embodiment, the processor 11 in the second embodiment performs a determination process of whether the floor limit can be temporarily released depending on the limited number of times and the period.

Once the processor 11 determines that the present position of the customer 50 is an "OK" (permitted) position (YES in ACT 13), the processor 11 further determines whether the current date and time is within the time period registered in the authentication table 122 (ACT 17). For example, the processor 11 refers to the clock 15 and determines whether the current date and time is within the registered time period from the authentication date and time (approval date and time) registered in the record of the authentication table 122. If the current date and time is not within the registered time period from the authentication date and time (NO in ACT 17), the processor 11 proceeds to the process of ACT 8 and returns the signature reply requiring customer's signature for the credit card settlement to the settlement apparatus 21 of the inquiry source store.

In the second embodiment, the determination process of lapse of the registered time period in ACT 15 is performed based on whether the registered time period has elapsed from the authentication date and time registered in the record of the authentication table 122. Accordingly, since the record with the elapsed time period is deleted from the authentication table 122, the determination process of ACT 17 is not necessary. In another embodiment, if the determination process of lapse of the registered time period in ACT 15 is to be performed at a regular interval, the record may remain in the authentication table 122, depending on a timing of the interval even if the registered time period has elapsed. In such a case, the processor 11 may be configured to perform the determination process of ACT 17.

If the current date and time is within the registered time period from the authentication date and time (YES in ACT 17), the processor 11 reduces the limited number of times registered in the authentication table 122 by one time (ACT 18). The processor 11 then determines whether the reduced limited number of times becomes negative, that is, whether the limited number of times exceeds the set limited number of times (ACT 19). If the limited number of times registered in the authentication table 122 does not become negative (NO in ACT 19), the processor 11 returns the reply allowing the signatureless settlement to the settlement apparatus 21 of the inquiry source store (ACT 11).

If the limited number of times registered in the authentication table 122 becomes negative (YES in ACT 19), the processor 11 deletes the record from the authentication table 122 (ACT 20). The processor 11 then returns the reply requiring customer's signature for the card settlement to the settlement apparatus 21 of the inquiry source store (ACT 8).

According to the present second embodiment, for example, the processor 11 of the server apparatus 10 may receive, from the customer portable terminal 30, period information which is seventh information for setting the period during which the floor limit is temporarily released (for example, ACT 1 and ACT 2 of FIG. 5). When the processor 11 approves the customer 50 by executing the user authentication processing (for example, ACT 3 and ACT 4 of FIG. 5), the processor 11 may associate the second information with the seventh information and register the second information associated with the seventh information in the authentication table 122 (for example, ACT 5 of FIG. 5). If the processor 11 determines that the period indicated by the seventh information registered in the authentication table 122 has elapsed (ACT 17), the processor 11 does not permit the signatureless settlement of the credit card at the settlement apparatus 21 (ACT8).

Accordingly, in the second embodiment, the period during which the floor limit is temporarily released can be freely set from the customer portable terminal 30.

In the second embodiment, the processor 11 may further receive, from the customer portable terminal 30, eighth information for setting the limited number of times in which the signatureless settlement can be permitted within the time period during which the floor limit is temporarily released (for example, ACT 1 and ACT 2 of FIG. 5). When the processor 11 approves the customer 50 by executing the user authentication processing (for example, ACT 3 and ACT 4 of FIG. 5), the processor 11 may further associate the second information with the eighth information and register the second information associated with the eight information in the authentication table 122 (for example, ACT 5 of FIG. 5). When the processor 11 determines that the number of times indicated by the eighth information registered in the authentication table 122 has been exceeded(ACT 18 to ACT 20), the processor 11 does not permit the signatureless settlement of the credit card at the settlement apparatus 21 (ACT 8).

Accordingly, in the second embodiment, in the time period during which the floor limit is temporarily released, the number of times for releasing the floor limit can be freely set from the customer portable terminal 30.

Furthermore, when the processor 11 determines that the number of times indicated by the eighth information registered in the authentication table 122 has been exceeded, the processor 11 may delete the registered information from the authentication table 122 (ACT 20).

Accordingly, in the second embodiment, when the limited number of times of approval is exceeded, the record in which the information is registered is deleted from the authentication table 122, thereby making it possible to realize the temporary release of the floor limit.

Embodiments are not limited to the first and second embodiments. For example, while the customer portable terminal 30 may use the smartphone application to realize the setting for a temporary release of the floor limit and the function of user authentication, the customer portable terminal 30 may instead be used to access a web page provided by the server apparatus 10 where the customer 50 can perform the setting operations and the user authentication process.

In the first and second embodiments, the record in which the information is registered is deleted from the authentication table 122 when the predetermined time period elapses from the authentication date and time. In another embodiment, the time period during which the floor limit is temporarily released may be extended by updating the approval data and time if the inquiry is received from the settlement apparatus 21 before the predetermined time period elapses.

In the second embodiment, both a time period during which the floor limit is temporarily released and a limited number of times can be set. In another embodiment, only one of the time period and the limited number of times may be set.

While certain embodiments have been described, these embodiments have been presented by way of example only and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An information processing apparatus, comprising:
a processor configured to:
receive first information for user authentication of a credit card customer from a customer terminal;
register second information that specifies a credit card of the credit card customer if the credit card customer is authenticated in the user authentication based on the first information;
receive third information that specifies the credit card for credit card settlement from a settlement apparatus; and
transmit a response to the settlement apparatus indicating signatureless settlement is permitted for the credit card when the registered second information specifies the credit card.

2. The information processing apparatus according to claim 1, wherein the processor is further configured to:
receive fourth information indicating a position of the customer terminal;
register the fourth information in association with the registered second information;
receive fifth information indicating a position of the settlement apparatus; and
transmit the response to the settlement apparatus indicating signatureless settlement is permitted for the credit card when both the registered second information specifies the credit card and the registered fourth information corresponds with the received fifth information.

3. The information processing apparatus according to claim 2, wherein the processor is further configured to determine whether the position indicated by the fourth information is within a predetermined range from the position indicated by the fifth information.

4. The information processing apparatus according to claim 3, wherein the processor is configured to transmit the response to the settlement apparatus indicating signatureless settlement is permitted for the credit card even when an upper transaction limit for signatureless settlement is exceeded.

5. The information processing apparatus according to any one of claims 1 to 4, wherein the processor is further configured to:
register sixth information indicating an approval date and time in association with the registered second information; and
delete the registered second information if a predetermined time period has elapsed from the approval date and time indicated by the sixth information.

6. The information processing apparatus according to claim 5, wherein the processor is further configured to obtain a current date and time to determine whether the predetermined time period has elapsed from the approval data and time.

7. The information processing apparatus according to claim 5 or 6, wherein the processor is further configured to:
receive seventh information for setting the predetermined time period; and
register the seventh information in association with the registered second information.

8. The information processing apparatus according to any one of claims 5 to 7, wherein the processor is further configured to:
receive eighth information setting a number of times that the signatureless settlement can be permitted within the predetermined time period;
register the eighth information in association with the registered second information; and
determine whether the number of times set based on the eight information has been exceeded.

9. The information processing apparatus according to claim 8, wherein the processor is further configured to transmit the response to the settlement apparatus indicating signatureless settlement is permitted for the credit card only when both the predetermined time period has not elapsed and the number of times has not been exceeded.

10. The information processing apparatus according to claim 8 or 9, wherein the processor is further configured to delete the registered second information if the number of times has been exceeded.

11. The information processing apparatus according to any one of claims 1 to 10, wherein credit card includes a non-contact integrated circuit (IC) chip.

12. The information processing apparatus according to claim 11, further comprising a communication interface configured to communicatively connect to the customer terminal and the settlement apparatus.

13. A non-transitory computer-readable medium storing a program for causing a computer to perform a process comprising:
receiving first information for user authentication of a credit card customer from a customer terminal;
registering second information that specifies a credit card of the credit card customer if the credit card customer is authenticated in the user authentication based on the first information;
receiving third information that specifies the credit card for credit card settlement from a settlement apparatus; and
transmitting a response to the settlement apparatus indicating signatureless settlement is permitted for the credit card when the registered second information specifies the credit card.

14. The non-transitory computer-readable medium according to claim 13, wherein the process further comprises:
receiving fourth information indicating a position of the customer terminal;
registering the fourth information in association with the registered second information;
receiving fifth information indicating a position of the settlement apparatus; and
transmitting the response to the settlement apparatus indicating signatureless settlement is permitted for the credit card when both the registered second information specifies the credit card and the registered fourth information corresponds with the received fifth information.

15. The non-transitory computer-readable medium according to claim 13 or 14, wherein the process further comprises:
registering sixth information indicating an approval date and time in association with the registered second information; and
deleting the registered second information if a predetermined time period has elapsed from the approval date and time indicated by the sixth information.
